# EUROPEAN PATENT APPLICATION

(11) **EP 4 610 224 A1**
(43) Date of publication of application: **03.09.2025**
(21) Application number: 23881832.2
(22) Date of filing: 24.10.2023
(51) Int. Cl.: C01B 32/194, C01B 32/19

(54) **EDGE-GRAFTING-MODIFIED GRAPHENE, AQUEOUS DISPERSION THEREOF, AND PREPARATION METHOD THEREFOR**

(30) Priority: 24.10.2022 CN 202211303684
(71) Applicant: CHINA PETROLEUM & CHEMICAL CORPORATION, Chaoyang District Beijing 100728 (CN); Sinopec (Beijing) Research Institute of Chemical Industry Co., Ltd., Beijing 100013 (CN)
(72) Inventor: QI, Guicun, Beijing 100013 (CN); JIANG, Chao, Beijing 100013 (CN); RU, Yue, Beijing 100013 (CN); WANG, Xiang, Beijing 100013 (CN); HAN, Peng, Beijing 100013 (CN); ZHANG, Jiangru, Beijing 100013 (CN); CAI, Chuanlun, Beijing 100013 (CN); SONG, Zhihai, Beijing 100013 (CN); GUO, Zhaoyan, Beijing 100013 (CN); HU, Chenxi, Beijing 100013 (CN); LIU, Wenlu, Beijing 100013 (CN); ZHANG, Hongbin, Beijing 100013 (CN)
(74) Representative: Hoffmann Eitle
(86) International application number: PCT/CN2023/126215
(87) International publication number: WO 2024/088254

(57) **Abstract**

The present invention belongs to the technical field of graphene preparation, and relates to an edge-grafting-modified graphene, an aqueous dispersion thereof, and a preparation method therefor. The edge-grafting-modified graphene comprises graphene and a water-soluble high-molecular polymer grafted on the edge of the graphene. On the basis of the total mass of the edge-grafting-modified graphene, the mass content of the water-soluble high-molecular polymer grafted in the edge-grafting-modified graphene is 1-30%. Compared with milling techniques such as ultrasound milling, ball milling and sand milling, milling discs have a weak damage effect on the crystal structure of graphite and therefore can easily prepare large lamellar graphene. Additionally, the water-soluble high-molecular polymer can improve the viscosity of a solution and thus indirectly transfer a shearing force between milling discs to graphite flakes, thereby further lowering the damage to crystal lattices of graphite and improving the exfoliation effect of the graphite flakes. In addition, the water-soluble high-molecular polymer can be grafted to graphene, and has a stabilization effect, thereby forming a stable aqueous dispersion of the edge-grafting-modified graphene.

## Description

### Technical field

The present invention belongs to the technical field of graphene preparation, and particularly relates to an edge-grafting-modified graphene, an aqueous dispersion of edge-grafting-modified graphene, and preparation methods thereof.

### Background art

Graphene is a monolayer of carbon atoms in a honeycomb structure formed by one carbon atom bonded to three immediately surrounding carbon atoms. Graphene attracts attention as a novel material with high light transmittance, high electrical conductivity, high thermal conductivity, high specific surface area, and excellent mechanical properties. At present, graphene is in the exploration phase of large-scale preparation and application. The preparation technology of high-quality low-cost functionalized graphene is the basis of future large-scale application. Technologists have developed a series of preparation technologies: mechanical exfoliation method, redox method, chemical vapor deposition method, epitaxial growth method, thermal expansion method, electrochemical method and the like. Among them, the mechanical exfoliation method and the redox method both concern with the preparation based on graphite raw material through a mechanical or chemical exfoliation technology, which are characterized in that the source of the raw material is abundant, and the cost is easy to control. These methods are more suitable for the large-scale production of graphene. The redox method comprises the steps of oxidizing natural graphite with a strong oxidant, introducing abundant polar groups to the surface, and obtaining graphene oxide through solvation or ultrasonic dispersion, and then reducing to remove the polar groups on the surface of the graphene oxide to obtain graphene. However, a large amount of strong acid and strong oxidant, such as concentrated sulfuric acid, fuming nitric acid, potassium permanganate, perchloric acid and the like are used in the production process, resulting in serious waste liquid pollution. The prepared graphene has certain defects, such as topological defects of five-membered rings, seven-membered rings and the like left by polar groups removed by reduction or structural defects of hydroxyl groups, which will result in the loss of partial electrical properties of the graphene, so that the application of the graphene is limited. In the national standard GB/T30544.13-2018 «Nanotechnology-terminology part 13: graphene and related two-dimensional materials», graphene oxide and reduced graphene oxide are defined separately to distinguish graphene.

The graphene obtained by oxidation contains abundant oxygen-containing groups on the surface, such as epoxy groups, hydroxyl groups, carboxyl groups and the like, and can be subjected to covalent bond modification through chemical reaction. Salavagine HJ et al (Salavagione H J, G Martinez, MA Gómez. Synthesis of poly(vinyl alcohol)/reduced graphite oxide nanocomposites with improved thermal and electrical properties[J]. Journal of Materials Chemistry, 2009, 19(28):5027-5032) studied the graft of PVA to graphene oxide through esterification between hydroxyl groups on the PVA and carboxyl groups on the graphene oxide to obtain PVA grafted graphene oxide. Wang Bo et al (Wang Bo, He Shengfu, Zhang Fan et al, Preparation of Graphene Oxide Modified by Dendritic Polyamide-Amine Grafted and Its Adsorption Thermodynamics and Kinetics for Cu (II) [J], Fine Chemicals, 2014, 31(8): 8) studied polyamide-amine grafted graphene oxide. Xu Guoqiang et al (Xu Guoqiang, Xu Pengwu, Shi Dongjian et al, Preparation and Cellular Imaging of PEG grafted Graphene Oxide [J], Chinese Journal of Inorganic Chemistry, 2014, 30(009): 1994-1999) studied PEG grafted graphene oxide. Li Shanrong et al (Li Shanrong, Lu Shaorong, Qi Bo et al, Synthesis and Application of Biphenyl Liquidcrystal with Epoxy Groups Grafted Graphene Oxide [J], Polymer Material Science and Engineering, 2013, 29(007): 17-20) studied biphenyl thermotropic liquid crystal grafted graphene oxide. They all utilized abundant active groups on the surface of graphene oxide prepared by oxidation method to prepare grafted graphene oxide. However, these grafting technologies based on graphene oxide still have topological defects such as five-membered rings, seven-membered rings and the like and residual oxygen-containing groups present on the surface of graphene. These technologies concern with PVA grafted graphene oxide or PVA grafted reduced graphene oxide.

Commonly used mechanical exfoliation methods include ball milling method, sand milling method, ultrasonic method and the like. Although these methods can be used for producing graphene in a large scale, the graphene is damaged seriously due to large destructive effect of mechanical force, and the size of the graphene is usually small, even smaller than 100 nm. Therefore, one technical key of the mechanical exfoliation method is to reduce the destructiveness and prepare graphene with larger size. In addition, due to relatively strong mechanical force, ball milling method, sand milling method, ultrasonic method and the like may lead to a greater degree of surface grafting of graphene, and excessive surface grafting will have a negative impact on the excellent electrical conductivity, thermal conductivity and other properties of graphene itself. Therefore, another technical key of the mechanical exfoliation method is to reduce surface grafting and prepare an edge grafted graphene.

Stable aqueous dispersions of graphene are widely used in chemical, electronic, energy, medical and other fields. There remains a need in the art for an efficient and low-cost method capable of forming an aqueous dispersion of graphene that is stable over a long period of time, for example, over a year or more.

It is therefore an object of the present invention to provide an edge-grafting-modified graphene having a large size, which is capable of forming an aqueous dispersion that is stable over a long period of time, and which has desirable electrical conductivity and thermal conductivity. Another object of the present invention is to provide efficient and low-cost methods for preparing such edge-grafting-modified graphene and stable aqueous dispersion.

### Contents of the invention

The present invention provides an edge-grafting-modified graphene, a stable aqueous dispersion of edge-grafting-modified graphene, and preparation methods thereof.

A first aspect of the present invention is to provide an edge-grafting-modified graphene, comprising a graphene and a water-soluble polymer grafted on the edge thereof, wherein the mass content of the water-soluble polymer grafted in the edge-grafting-modified graphene is 1-30%, preferably 2-25%, based on the total mass of the edge-grafting-modified graphene.

A second aspect of the present invention is to provide an aqueous dispersion of edge-grafting-modified graphene, comprising water and an edge-grafting-modified graphene stably dispersed therein, wherein the edge-grafting-modified graphene is the edge-grafting-modified graphene described above.

A third aspect of the present invention is to provide a preparation method of the aqueous dispersion of edge-grafting-modified graphene described above, comprising following steps:
uniformly mixing a water-soluble polymer, water and graphite, milling in a milling disc kettle after the water-soluble polymer is completely dissolved, standing after milling is finished, and removing precipitates to obtain the aqueous dispersion of edge-grafting-modified graphene.

A fourth aspect of the present invention is to provide a preparation method of the edge-grafting-modified graphene, comprising the following steps:
(1) preparing an aqueous dispersion of edge-grafting-modified graphene according to the method described above;
(2) filtering the aqueous dispersion of the edge-grafting-modified graphene obtained in the step (1), and drying to obtain the edge-grafting-modified graphene.

A fifth aspect of the present invention is to provide application of the edge-grafting-modified graphene or the aqueous dispersion of edge-grafting-modified graphene in the fields of antistatic or conductive composite polymer materials, heat conductive composite polymer materials, multi-layer composite barrier film, barrier layer materials, adsorption materials, functional coatings, antistatic or conductive fiber materials, sunlight or microwave absorption materials.

The edge-grafting-modified graphene and the aqueous dispersion thereof have following advantages:
1. Compared with ultrasonic, ball milling, sand milling and other milling processes, the destructive effect of milling discs on the graphite crystal structure is weak, and it is easy to prepare larger graphene flakes.
2. The water-soluble polymer can increase the viscosity of the solution, indirectly transfer the shearing force between milling discs to the graphite flakes, thereby further lowering the damage to crystal lattices of graphite, better keeping the performance of the graphene and improving the exfoliation effect of the graphite flakes.
3. The water-soluble polymer can be grafted to the edge of the graphene, and it has a stabilization effect, thereby forming a stable aqueous dispersion of edge-grafting-modified graphene.
4. The stable edge-grafting-modified graphene is easy to separate from the precipitated graphite flakes, so the preparation process of the modified graphene according to the present invention is very simple and convenient.

Additional features and advantages of the present invention will be set forth in detail in the specific embodiments given below.

### Description of Figures

A more detailed description of the exemplary embodiments of the present invention will be given by combining the Figures.
Figure 1 shows a schematic diagram of the preparation equipment of an aqueous dispersion of grafted graphene according to an embodiment of the present invention;
Figure 2 shows a photograph of the stable aqueous dispersion of the polyvinyl alcohol grafted graphene prepared in Examples 1-5;
Figure 3 shows a scanning electron microscope image and two-dimensional energy spectra of carbon element and oxygen element of the polyvinyl alcohol grafted graphene prepared in Example 1;
Figure 4 shows infrared absorption spectra of the polyvinyl alcohol grafted graphene prepared in Example 1, as well as of pure flake graphite and pure PVA, with the upper curve representing the flake graphite, the middle curve representing the PVA, and the lower curve representing the PVA grafted graphene;
Figure 5 shows a thermogravimetric analysis diagram of the polyvinyl alcohol grafted graphene prepared in Example 1, as well as of pure flake graphite and pure PVA, with the upper curve representing the flake graphite, the middle curve representing the PVA grafted graphene, and the lower curve representing the PVA;
Figure 6 shows a photograph of the stable aqueous dispersion of the grafted graphene prepared in Examples 6-8;
Figure 7 shows a scanning electron microscope image of the polyethylene glycol grafted graphene prepared in Example 6;
Figure 8 shows a thermogravimetric analysis diagram of the polyethylene glycol grafted graphene prepared in Example 6, with the upper curve representing the flake graphite, the middle curve representing the PEG grafted graphene, and the lower curve representing the PEG;
Figure 9 shows a scanning electron microscope image of the sodium polyacrylate grafted graphene prepared in Example 7;
Figure 10 shows a scanning electron microscope image of the xanthan gum grafted graphene prepared in Example 8;
Figure 11 shows a thermogravimetric analysis diagram of the xanthan gum grafted graphene prepared in Example 8, with the upper curve representing the flake graphite and the lower curve representing the xanthan gum grafted graphene;
Figure 12 shows a scanning electron microscope image of the polyacrylamide grafted graphene prepared in Example 9;
Figure 13 shows a scanning electron microscope image of the hydroxypropyl methylcellulose grafted graphene prepared in Example 10;
Figure 14 shows a scanning electron microscope image of the sodium maleate isobutylene copolymer grafted graphene prepared in Example 11;
Figure 15 shows a scanning electron microscope image of the polyethyleneimine grafted graphene prepared in Example 13;
Figure 16 shows schematic diagrams of graphene edge grafting/functionalization and graphene surface grafting/functionalization;
Figure 17 shows a scanning electron microscope image of the grafted graphene prepared by ball milling process in Comparative Example 4;
Figure 18 shows Raman spectra of graphene: (A) PVA edge grafted graphene prepared in Example 5, (B) reduced graphene oxide (Nanjing Ji Cang Nano Tech Co., Ltd., Model GCNM-1), (C) carboxyl modified graphene prepared in Comparative Example 4;
Figure 19 shows a pattern of the contact surface of the milling disc.

### Detailed description of specific embodiments

The specific embodiments of the present invention will be described in detail below. It should be understood that the specific embodiments described herein are only for illustrating and explaining the present invention, and are not intended to limit the present invention.

The present invention provides an edge-grafting-modified graphene, comprising a graphene and a water-soluble polymer grafted on the edge thereof, wherein the mass content of the water-soluble polymer grafted in the edge-grafting-modified graphene is 1-30%, preferably 2-25%, for example, 3%, 4%, 5%, 6%, 7%, 8%, 9%, 10%, 11%, 12%, 13%, 14%, 15%, 16%, 17%, 18%, 19%, 20%, 21%, 22%, 23%, 24%, encompassing ranges between any two of the foregoing values, based on the total mass of the edge-grafting-modified graphene.

The mass content of the water-soluble polymer grafted in the edge-grafting-modified graphene has an impact on the dispersibility and physical properties (such as thermal conductivity and electrical conductivity) of the modified graphene. If the mass content of the water-soluble polymer is too low, the dispersibility of graphene cannot be effectively improved, making it impossible to form an aqueous dispersion that is stable over a long period of time. If the mass content of the water-soluble polymer is too high, the physical properties of the graphene itself are adversely affected, causing deterioration in the physical properties (such as thermal conductivity and electrical conductivity) of the modified graphene. Therefore, the mass content of the water-soluble polymer should be in an appropriate range so as to obtain a balance of the dispersibility and physical properties (such as thermal conductivity and electrical conductivity) of the modified graphene.

In the present invention, the mass content of the water-soluble polymer grafted in the edge-grafting-modified graphene can be measured by a thermogravimetric analysis method. For example, the mass loss of the sample measured from 50.00°C to 800.00°C at a heating rate of 20.00°C/min, under the conditions of a nitrogen flow rate of 20.0 ml/min and an equilibrium nitrogen flow rate of 40.0 ml/min, is the mass content of the water-soluble polymer grafted to graphene.

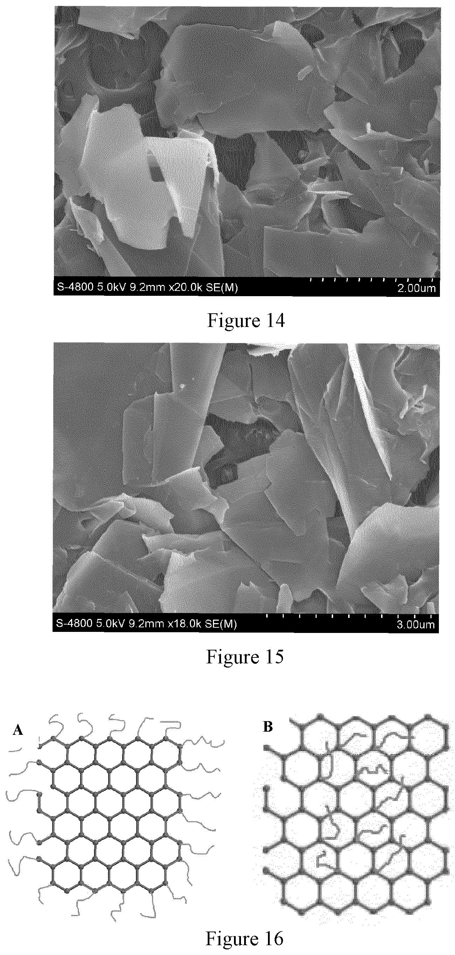

In the present invention, the expression "edge" refers to an outer edge of the graphene sheet/graphene lattice. As shown in Figure 16A, "edge grafting/functionalization" means that the modifying molecule is attached to the atom at the edge of the graphene lattice through chemical bond.

In the present invention, the expression "surface" refers to a position of the graphene sheet/graphene lattice exposed to the outside, except for the outer edge. As shown in Figure 16B, "surface grafting/functionalization" means that the modifying molecule is attached to the atom on the surface of the graphene lattice through chemical bond.

In the present invention, due to the combined use of the milling disc process and the water-soluble polymer, the graphite is subjected to proper shearing and exfoliation effects, to generate reactive sites at the edge of the graphene lattice, while the surface of the graphene lattice is basically not destroyed, whereby the obtained graphene is edge-grafting-modified graphene. The expression "edge-grafting-modified graphene" means that at least 90 wt%, preferably at least 95 wt%, at least 96 wt%, at least 97 wt%, at least 98 wt%, more preferably at least 99 wt%, most preferably 100 wt% of the grafting polymer is attached to the atom at the edge of the graphene lattice through chemical bond.

In the present invention, an average value of *I_{D}*/*I_{G}* in the Raman spectrum of the edge-grafting-modified graphene is 0.05-0.60, preferably 0.08-0.55, preferably 0.08-0.50. For example, from a lower limit of 0.05, 0.06, 0.07, 0.08, 0.09 or 0.10 to an upper limit of 0.40, 0.45, 0.46, 0.47, 0.48, 0.49, 0.50, 0.55 or 0.60.

In the present invention, the edge-grafting-modified graphene can form a stable aqueous dispersion in water, and the aqueous dispersion is stable under room temperature and normal pressure conditions for more than 10 months, preferably more than 12 months, preferably more than 15 months.

In the present invention, the term "water-soluble polymer" may mean either a compound form or a group form, for example, the water-soluble polymer in the "water-soluble polymer grafted on the edge thereof" is a group form, and the water-soluble polymer in the preparation method is a compound form. Those skilled in the art can clearly distinguish between the meanings referred to herein according to the different context.

The inventor of the present invention, during the study of the preparation of graphene by exfoliating graphite/water slurry via a milling disc, finds that adding a water-soluble polymer to a system to increase the viscosity of the system can improve the graphite exfoliation effect, and unexpectedly, the water-soluble polymer can be grafted to the exfoliated graphene and can form a stable aqueous dispersion of grafting modified graphene.

The structure and property of the edge-grafting-modified graphene according to the present invention are significantly different from those of the existing grafted graphene oxide or grafted reduced graphene oxide.

In view of structure, the national standard GB/T30544.13-2018 defines graphene oxide and reduced graphene oxide separately, wherein the graphene oxide is chemically modified graphene obtained by oxidizing and exfoliating graphite, and its surface has been strongly oxidized and modified with high oxygen content; the reduced graphene oxide is graphene oxide after the oxygen content is reduced, which still retains some oxygen-containing functional groups, and the SP³ chemical bond cannot be completely reduced to the SP² chemical bond, leaving many topological defects. Therefore, the structures of graphene oxide and reduced graphene oxide are different from those of graphene. Graphene is adopted in the present invention, but not graphene oxide and reduced graphene oxide. In view of properties, the polymer modified graphene reported in the literature is mostly based on grafting reaction between oxygen-containing groups of graphene oxide and active groups of the polymer, followed by reduction to obtain the polymer grafted graphene.

According to the present invention, the water-soluble polymer may be at least one of a water-soluble natural polymer, a water-soluble semisynthetic polymer, and a water-soluble synthetic polymer.

According to a preferred embodiment of the present invention, the water-soluble natural polymer is selected from at least one of guar gum, xanthan gum, gelatin and Arabic gum.

According to a preferred embodiment of the present invention, the water-soluble semisynthetic polymer is selected from at least one of a modified starch and a modified cellulose. Further, the modified cellulose is preferably at least one of hydroxyethyl cellulose, hydroxypropyl methylcellulose and methylcellulose.

According to a preferred embodiment of the present invention, the water-soluble synthetic polymer is selected from at least one of a compound of formula I, a compound of formula II, a compound of formula III, a compound of formula IV and a salt thereof (such as corresponding sodium, potassium or ammonium salt of the copolymerized anhydride units), a compound of formula V and a salt thereof (such as corresponding sodium, potassium or ammonium salt of the copolymerized anhydride units), and a compound of formula VI; 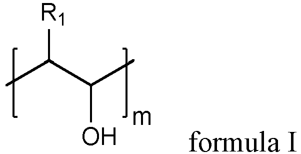 in formula I, R₁ is H or C₁-C₄ alkyl; m is an integer of ≥400; 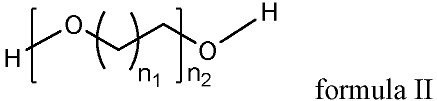 in formula II, n₁ is an integer of 1-8; n₂ is an integer of ≥10; 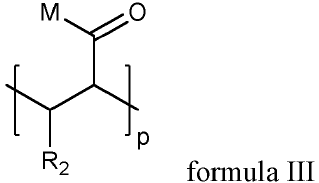 in formula III, R₂ is H or C₁-C₄ alkyl; M is OR₃ or amino, R₃ is H, alkali metal or NH₄; p is an integer of ≥500; 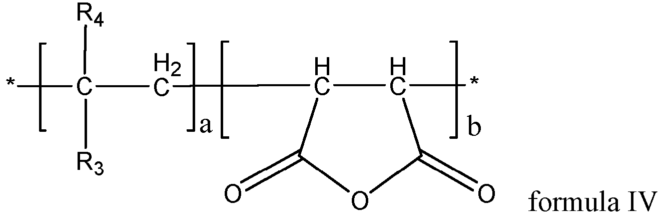 in formula IV, R₄ is C₁-C₃ alkyl or phenyl, R₅ is H or methyl, a, b are each independently an integer of ≥50; 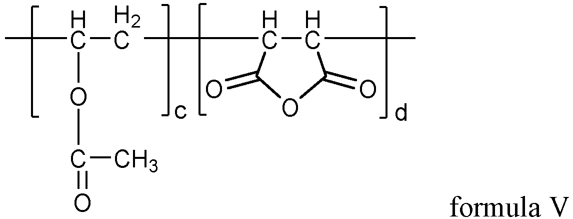 in formula V, c, d are each independently an integer of ≥50; 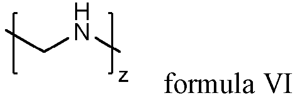 in formula VI, z is an integer of ≥50.

In the present invention, C₁-C₄ alkyl includes methyl, ethyl, n-propyl, isopropyl, n-butyl, isobutyl, tert-butyl, and C₁-C₃ alkyl includes methyl, ethyl, n-propyl, isopropyl.

Further, the compound of formula I is polyvinyl alcohol (PVA); the PVA used in the present invention may be various types of water-soluble PVA available in the prior art, and there are no special restrictions on the degree of alcoholysis, degree of polymerization, or copolymerized units.

Further, the compound of formula II is polyethylene glycol, polypropylene glycol, polybutylene glycol, polypentylene glycol, polyhexylene glycol, polyheptylene glycol or polyoctylene glycol.

Further, the compound of formula III is polyacrylic acid, sodium polyacrylate, potassium polyacrylate, ammonium polyacrylate, lithium polyacrylate, polymethacrylic acid, sodium polymethacrylate, potassium polymethacrylate, ammonium polymethacrylate, lithium polymethacrylate, or polyacrylamide.

Further, the compound of formula IV is maleic anhydride 1-butene copolymer, maleic anhydride isobutylene copolymer, maleic anhydride styrene copolymer, maleic anhydride α-methyl styrene copolymer, maleic anhydride 1-pentene copolymer, and the water-soluble synthetic polymer can also be corresponding sodium, potassium or ammonium salt of the compound of formula IV.

Further, the compound of formula V is maleic anhydride vinyl acetate copolymer, and the water-soluble synthetic polymer can also be corresponding sodium, potassium or ammonium salt thereof.

Further, the compound of formula VI is water-soluble polymer polyethyleneimine.

The above-mentioned high-molecular compound useful in the present invention may be the above-mentioned polymers which are conventionally commercially available.

In one embodiment, the water-soluble synthetic polymer is selected from water-soluble natural polymers, preferably xanthan gum, and the mass content of the grafted water-soluble polymer in the edge-grafting-modified graphene is 1-30%, preferably 1-15%, preferably 2-10%, preferably 1-5%, based on the total mass of the edge-grafting-modified graphene. The edge-grafting-modified graphene can form a stable aqueous dispersion in water, and the aqueous dispersion is stable under room temperature and normal pressure conditions for more than 10 months, preferably more than 12 months. The average value of *I_{D}*/*I_{G}* in the Raman spectrum of the edge-grafting-modified graphene is 0.05-0.60, preferably 0.06-0.50, preferably 0.08-0.45.

In one embodiment, the water-soluble synthetic polymer is selected from water-soluble semisynthetic polymer, preferably hydroxypropyl methylcellulose, and the mass content of the grafted water-soluble polymer in the edge-grafting-modified graphene is 1-30%, preferably 1-15%, preferably 2-10%, preferably 1-5%, based on the total mass of the edge-grafting-modified graphene. The edge-grafting-modified graphene can form a stable aqueous dispersion in water, and the aqueous dispersion is stable under room temperature and normal pressure conditions for more than 10 months, preferably more than 12 months, preferably more than 15 months. The average value of *I_{D}*/*I_{G}* in the Raman spectrum of the edge-grafting-modified graphene is 0.05-0.60, preferably 0.06-0.50, preferably 0.08-0.45.

In one embodiment, the water-soluble synthetic polymer is selected from compounds of formula I, preferably polyvinyl alcohol, and the mass content of the grafted water-soluble polymer in the edge-grafting-modified graphene is 1-30%, preferably 3-25%, preferably 5-16%, based on the total mass of the edge-grafting-modified graphene. The edge-grafting-modified graphene can form a stable aqueous dispersion in water, and the aqueous dispersion is stable under room temperature and normal pressure conditions for more than 10 months, preferably more than 12 months, preferably more than 15 months. The average value of *I_{D}*/*I_{G}* in the Raman spectrum of the edge-grafting-modified graphene is 0.05-0.60, preferably 0.08-0.50, preferably 0.09-0.50.

In one embodiment, the water-soluble synthetic polymer is selected from compounds of formula II, preferably polyethylene glycol, and the mass content of the grafted water-soluble polymer in the edge-grafting-modified graphene is 1-30%, preferably 3-25%, preferably 5-16%, based on the total mass of the edge-grafting-modified graphene. The edge-grafting-modified graphene can form a stable aqueous dispersion in water, and the aqueous dispersion is stable under room temperature and normal pressure conditions for more than 10 months, preferably more than 12 months. The average value of *I_{D}*/*I_{G}* in the Raman spectrum of the edge-grafting-modified graphene is 0.05-0.60, preferably 0.08-0.50, preferably 0.09-0.50.

In one embodiment, the water-soluble synthetic polymer is selected from compounds of formula III, preferably sodium polyacrylate or polyacrylamide, and the mass content of the grafted water-soluble polymer in the edge-grafting-modified graphene is 1-30%, preferably 1-15%, preferably 2-10%, based on the total mass of the edge-grafting-modified graphene. The edge-grafting-modified graphene can form a stable aqueous dispersion in water, and the aqueous dispersion is stable under room temperature and normal pressure conditions for more than 10 months, preferably more than 12 months, preferably more than 15 months. The average value of *I_{D}*/*I_{G}* in the Raman spectrum of the edge-grafting-modified graphene is 0.05-0.60, preferably 0.06-0.50, preferably 0.08-0.45.

In one embodiment, the water-soluble synthetic polymer is selected from compounds of formula IV, preferably maleic anhydride isobutylene copolymer, and the mass content of the grafted water-soluble polymer in the edge-grafting-modified graphene is 1-30%, preferably 3-25%, preferably 5-16%, based on the total mass of the edge-grafting-modified graphene. The edge-grafting-modified graphene can form a stable aqueous dispersion in water, and the aqueous dispersion is stable under room temperature and normal pressure conditions for more than 10 months, preferably more than 12 months. The average value of *I_{D}*/*I_{G}* in the Raman spectrum of the edge-grafting-modified graphene is 0.05-0.60, preferably 0.08-0.50, preferably 0.09-0.50.

In one embodiment, the water-soluble synthetic polymer is selected from compounds of formula V, preferably maleic anhydride vinyl acetate copolymers, and the mass content of grafted water-soluble polymer in the edge-grafting-modified graphene is 1-30%, preferably 3-25%, preferably 5-16%, based on the total mass of the edge-grafting-modified graphene. The edge-grafting-modified graphene can form a stable aqueous dispersion in water, and the aqueous dispersion is stable under room temperature and normal pressure conditions for more than 10 months, preferably more than 12 months, preferably more than 15 months. The average value of *I_{D}*/*I_{G}* in the Raman spectrum of the edge-grafting-modified graphene is 0.05-0.60, preferably 0.08-0.50, preferably 0.09-0.50.

In one embodiment, the water-soluble synthetic polymer is selected from compounds of formula VI, preferably polyethyleneimine, and the mass content of the grafted water-soluble polymer in the edge-grafting-modified graphene is 1-30%, preferably 3-25%, preferably 5-16%, based on the total mass of the edge-grafting-modified graphene. The edge-grafting-modified graphene can form a stable aqueous dispersion in water, and the aqueous dispersion is stable under room temperature and normal pressure conditions for more than 10 months, preferably more than 12 months. The average value of *I_{D}*/*I_{G}* in the Raman spectrum of the edge-grafting-modified graphene is 0.05-0.60, preferably 0.08-0.50, preferably 0.09-0.50.

According to the present invention, the shearing and exfoliation effect of the milling disc on graphite is exerted through the polymer solution, which has a smaller destructive effect on graphene compared to ball milling method, sand milling method and the like. Therefore, the edge grafted graphene sheet is relatively large. Specifically, the average lateral size of the edge-grafting-modified graphene is 1-10 µm, preferably 2-5 µm.

The average lateral size of the edge-grafting-modified graphene can be obtained by randomly measuring the sizes of more than 10 sheets of graphene and calculating the average value after imaging with scanning electron microscopy (SEM) or atomic force microscopy. The measurement method for the size of a single graphene sheet: draw three lines on the surface of the graphene sheet through the center of the sheet as much as possible, with an angle of about 60° between the lines, measure the length of the graphene sheet along the three lines, and calculate the average value as the size of the graphene sheet.

The present invention also provides an aqueous dispersion of edge-grafting-modified graphene, comprising water and the edge-grafting-modified graphene stably dispersed therein, wherein the edge-grafting-modified graphene is the edge-grafting-modified graphene described above.

According to a preferred embodiment of the present invention, the mass fraction of the edge-grafting-modified graphene in the aqueous dispersion is 2-40%, preferably 3-30%.

The stable time of the aqueous dispersion of the present invention under room temperature and normal pressure conditions can exceed 10 months. The stable time in the present invention means that no precipitation visible to the naked eye occurs during this time period, specifically, the amount of precipitation is less than 1%.

The present invention also provides a preparation method of the aqueous dispersion of edge-grafting-modified graphene described above, which comprises following steps:
uniformly mixing a water-soluble polymer, water and graphite, milling in a milling disc kettle after the water-soluble polymer is completely dissolved, standing after milling is finished, and removing precipitates to obtain the aqueous dispersion of edge-grafting-modified graphene.

Specifically, the method comprises following steps:
dissolving a water-soluble polymer in deionized water, then uniformly mixing graphite in the polymer solution, milling in a milling disc kettle, standing after milling is finished, and removing precipitates to obtain the aqueous dispersion of edge-grafting-modified graphene.

According to the present invention, a stable aqueous dispersion of edge-grafting-modified graphene is prepared based on the technology of exfoliating graphite by milling discs with the aid of an aqueous solution of a water-soluble polymer, and in-situ grafting.

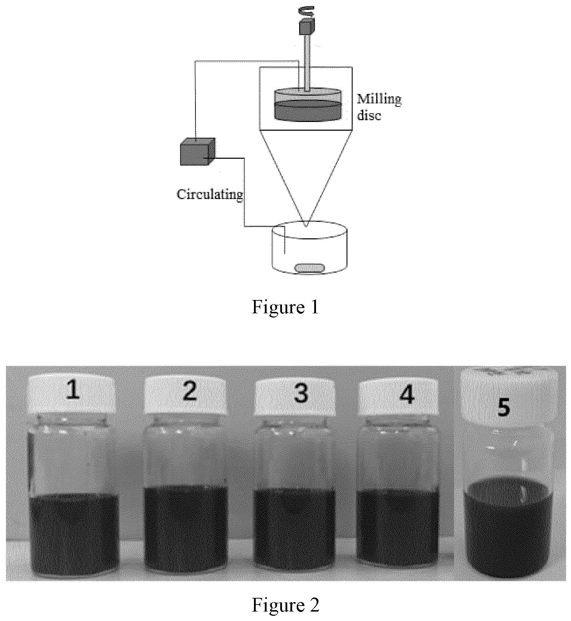

According to a preferred embodiment of the present invention, the milling is circulatory milling, and the mechanical exfoliation equipment used consists of a milling disc part and a circulating part, the schematic diagram of its structure being shown in Figure 1. The milling disc part comprises a moving milling disc, a static milling disc and a rotating device, and the circulating part comprises a circulating pump, a slurry storage tank and a stirring device. Wherein the material of the milling discs can be selected from metal, ceramic, glass, plastic and the like, and a metal material is preferred.

In the exfoliation process with the milling discs, the moving/static milling discs transfer shearing force to the graphite flakes between the milling discs through the polymer tackified aqueous solution. The graphite flakes are firstly oriented along the rotation direction of the milling disc under the action of shearing stress, then are slowly exfoliated into thinner graphite flakes, and finally exfoliated into graphene. In the exfoliation process, a plurality of new edges are generated, while the carbon atoms at the new edges have high activity, and react with the active groups of the water-soluble polymer in the aqueous solution to generate the edge grafted graphene.

The raw materials of the present invention mainly include a water-soluble polymer, deionized water and graphite, which are environmentally friendly, so the milling can be carried out in an open system. It also means that the preparation process (such as circulatory milling) can be operated at room temperature and normal pressure. And, there is no specific requirements on the atmosphere of the system. The milling of the present invention can also be carried out in a closed system.

"Room temperature" generally means that the preparation system is at indoor temperature, for example, a temperature of about 20°C (18~25°C), and "normal pressure" generally means that the preparation system is in communication with the atmosphere, for example, at a pressure of -0.02 MPa < p < 0.1 MPa.

The milling conditions selected in the present invention may include: a rotation speed is 10-300 rpm, preferably 50-200 rpm; a time is 5-200 h, preferably 10-150 h, more preferably 30-120 h.

The water-soluble polymer selected in the present invention has two effects: (1) to increase the viscosity of the dispersion system, thereby improving the exfoliation effect of the milling disc on the graphite flakes, and (2) to be grafted to graphene, and to stabilize the graphene exfoliated in the aqueous solution.

In the method of the present invention, the graphite may be natural graphite and/or artificial graphite, wherein the natural graphite may be selected from one or more of flake graphite, block graphite, aphanitic graphite, the artificial graphite may be selected from one or more of pyrolytic graphite, highly oriented pyrolytic graphite. The graphite is preferably flake graphite. The particle size of the graphite may be 5-8000 mesh, preferably 35-3000 mesh, more preferably 50-1600 mesh, and still more preferably 50-300 mesh.

According to a preferred embodiment of the present invention, the water-soluble polymer is mixed with water first, and then graphite is added, wherein the concentration of the water-soluble polymer may be 0.3-80% by mass, preferably 0.5-50% by mass, more preferably 1-40% by mass, based on the total mass of the water-soluble polymer and water.

In the method of the present invention, the mass ratio of the water-soluble polymer to the graphite may be 1: 0.05-80, preferably 1: 0.1-50, preferably 1: 0.2-40.

In one embodiment, the water-soluble synthetic polymer is selected from water-soluble natural polymers, preferably xanthan gum, and the concentration of the water-soluble polymer may be 0.3-80% by mass, preferably 0.3-20% by mass, preferably 0.5-10% by mass, based on the total mass of the water-soluble polymer and water. The mass ratio of the water-soluble polymer to the graphite may be 1: 0.05-80, preferably 1: 0.5-60, preferably 1: 2-50.

In one embodiment, the water-soluble synthetic polymer is selected from water-soluble semisynthetic polymers, preferably hydroxypropyl methylcellulose, and the concentration of the water-soluble polymer may be 0.3-80% by mass, preferably 0.3-20% by mass, preferably 0.5-10% by mass, based on the total mass of the water-soluble polymer and water. The mass ratio of the water-soluble polymer to the graphite may be 1: 0.05-80, preferably 1: 0.5-60, preferably 1: 2-50.

In one embodiment, the water-soluble synthetic polymer is selected from compounds of formula I, preferably polyvinyl alcohol, and the concentration of the water-soluble polymer may be 0.3-80% by mass, preferably 2-50% by mass, preferably 5-40% by mass, based on the total mass of the water-soluble polymer and water. The mass ratio of the water-soluble polymer to the graphite may be 1: 0.05-80, preferably 1: 0.1-20, preferably 1: 0.2-10.

In one embodiment, the water-soluble synthetic polymer is selected from compounds of formula II, preferably polyethylene glycol, and the concentration of the water-soluble polymer may be 0.3-80% by mass, preferably 2-50% by mass, preferably 5-40% by mass, based on the total mass of the water-soluble polymer and water. The mass ratio of the water-soluble polymer to the graphite may be 1: 0.05-80, preferably 1: 0.1-20, preferably 1: 0.2-10.

In one embodiment, the water-soluble synthetic polymer is selected from compounds of formula III, preferably sodium polyacrylate or polyacrylamide, and the concentration of the water-soluble polymer may be 0.3-80% by mass, preferably 0.3-20% by mass, and preferably 0.5-10% by mass, based on the total mass of the water-soluble polymer and water. The mass ratio of the water-soluble polymer to the graphite may be 1: 0.05-80, preferably 1: 0.5-60, preferably 1: 2-50.

In one embodiment, the water-soluble synthetic polymer is selected from compounds of formula IV, preferably maleic anhydride isobutylene copolymer, and the concentration of the water-soluble polymer may be 0.3-80% by mass, preferably 2-50% by mass, preferably 5-40% by mass, based on the total mass of the water-soluble polymer and water. The mass ratio of the water-soluble polymer to the graphite may be 1: 0.05-80, preferably 1: 0.1-20, preferably 1: 0.2-10.

In one embodiment, the water-soluble synthetic polymer is selected from compounds of formula V, preferably maleic anhydride vinyl acetate copolymers, and the concentration of the water-soluble polymer may be 0.3-80% by mass, preferably 2-50% by mass, preferably 5-40% by mass, based on the total mass of the water-soluble polymer and water. The mass ratio of the water-soluble polymer to the graphite may be 1: 0.05-80, preferably 1: 0.1-20, preferably 1: 0.2-10.

In one embodiment, the water-soluble synthetic polymer is selected from compounds of formula VI, preferably polyethyleneimine, and the concentration of the water-soluble polymer may be 0.3-80% by mass, preferably 2-50% by mass, preferably 5-40% by mass, based on the total mass of the water-soluble polymer and water. The mass ratio of the water-soluble polymer to the graphite may be 1: 0.05-80, preferably 1: 0.1-20, preferably 1: 0.2-10.

The present invention also provides a preparation method of the edge-grafting-modified graphene or a purification method of the edge-grafting-modified graphene, which comprises following steps:
(1) preparing an aqueous dispersion of edge-grafting-modified graphene according to the method described above;
(2) filtering the aqueous dispersion of the edge-grafting-modified graphene obtained in the step (1), and drying to obtain the edge-grafting-modified graphene.

The filtration may be carried out by using various conventional methods, preferably, filtrating under reduced pressure by using a microporous filtration membrane, and a size of the micropores is 100-1000 nm, preferably 200-800 nm.

According to a preferred embodiment of the present invention, the filtering step further comprises diluting the aqueous dispersion of the edge-grafting-modified graphene before filtering.

According to a preferred embodiment of the present invention, the filtering step further comprises filtering off free water-soluble polymer with (deionized) water after filtering, to further purify the edge-grafting-modified graphene.

The present invention also provides application of the edge-grafting-modified graphene or the aqueous dispersion of edge-grafting-modified graphene described above in the fields of antistatic or conductive composite polymer materials, heat conductive composite polymer materials, multi-layer composite barrier film, barrier layer materials, adsorption materials, functional coatings, antistatic or conductive fiber materials, sunlight or microwave absorption materials.

According to the present invention in which the milling disc process is used, graphite dispersed in the water solution of the water-soluble polymer is subjected to circulatory exfoliation between the milling discs, wherein the shearing force between the static milling disc and the moving milling disc is transferred to the graphite flakes through the tackified aqueous solution, thereby avoiding the mechanical damage of the graphite sheet, and realizing the exfoliation of the graphite to prepare graphene. Compared with ball milling, sand milling, ultrasonic and other methods, the milling disc process effectively utilizes the exfoliation force between the milling discs, and reduces the damage of graphite flakes. Especially after tackification with the water-soluble polymer, the shearing force between the milling discs is more effectively transferred to the graphite flakes, which can improve the exfoliation efficiency, and reduce the destructive effect. Therefore, the graphene sheet prepared by the milling disc method is large, flat and not easy to agglomerate. More significantly, the water-soluble polymer can be grafted to the graphene, and make the graphene stably dispersed in water. Therefore, the edge modified graphene and the aqueous dispersion thereof have wide application in the fields of antistatic or conductive composite polymer materials, heat conductive composite polymer materials, multi-layer composite barrier film, barrier layer materials, adsorption materials, functional coatings, antistatic or conductive fiber materials, sunlight or microwave absorption materials and the like.

The present invention will be further described with reference to the following examples, but the scope of the present invention is not limited to these examples.

The experimental reagents in the following examples, except for those labeled as self-made, are all purchased commercially.

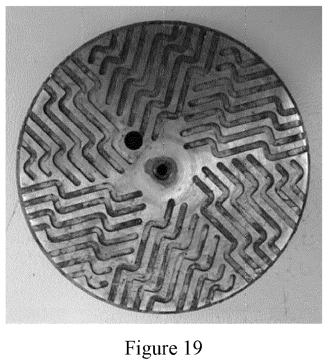

The preparation equipment used in the examples was as shown in Figure 1, wherein the milling discs were self-made, the material thereof was 304 stainless steel, the milling discs were provided on the contact surface with patterns at a depth of 1.0 mm (as shown in Figure 19), the surface thereof was subjected to nitriding and hardening treatment, the diameter of the milling discs was 28 cm, the upper milling disc was a moving milling disc, the lower milling disc was a static milling disc, and the feeding hole was positioned in the lower milling disc. A diaphragm pump (LongerPump, Model: BT600-2J) was used as a circulating pump to realize the circulatory milling of the slurry.

The infrared spectrum instrument used in the examples was Nicolet IS5 of Thermo Fisher, USA. Specifically, 3.0 mL of the aqueous dispersion of the polymer grafted graphene was added to 50 mL of deionized water for dilution, filtration under reduced pressure was performed through a microporous filtration membrane (Tianjin Jinteng) with a pore size of 0.54 µm, and then 1500 mL of deionized water was used to filter out free water-soluble polymer, so that a layer of modified graphene was obtained on the surface of the filtration membrane. Then, the infrared spectrum of the edge grafted graphene was tested based on a germanium crystal reflection method.

A scanning electron microscope (Hitachi, Japan, Model S4800) was used in the examples to observe the microscopic morphology and electron spectroscopy of the edge grafted graphene. Specifically, 0.5 mL of the aqueous dispersion of the polymer grafted graphene was added to 50 mL of deionized water for dilution, filtration under reduced pressure was performed through a polytetrafluoroethylene microporous filtration membrane (Tianjin Jinteng) with a pore size of 0.45 µm, and then 500 mL of deionized water was used to filter out free water-soluble polymer, so that a layer of modified graphene was obtained on the surface of the filtration membrane, gold spraying treatment was carried out on the surface of the modified graphene after drying, and then the microscopic morphology and electron spectroscopy of the modified graphene were characterized using the scanning electron microscope.

Confocal Raman microscopy (Renishaw, UK, Model HR 800) was used in the examples to characterize the crystal regularity of the edge grafted graphene. Specifically, 0.5 mL of the aqueous dispersion of the polymer grafted graphene was added to 50 mL of deionized water for dilution, filtration under reduced pressure was performed through a microporous filtration membrane (Tianjin Jinteng) with a pore size of 0.22 µm, and then 500 mL of deionized water was used to filter out free water-soluble polymer, so that a layer of modified graphene was obtained on the surface of the filtration membrane, and then it was dried. Thereafter, the Raman spectrum of the modified graphene was characterized using a confocal Raman microscopy spectrometer, with a scanning range of 600-3000 cm⁻¹, a laser wavelength of 532 nm, a 50× ocular lens (Olympus BX 41), and a spot diameter of about 1.0 µm. The Raman spectrum was tested at 3 points with a distance of 1.0 µm on the surface of a graphene sheet, and finally the average value of *I_{D}*/*I_{G}* was calculated. *I_{D}*/*I_{G}* in the Raman spectrum is the ratio of the intensities of D peak and G peak, which can represent the crystal regularity of the graphene. The lower the ratio is, the more regular the prepared graphene will be, and the higher the ratio is, the more serious the damage of the graphene lattice will be.

The test instrument for the thermal conductivity coefficient of graphene in the examples was Netzsch LFA467, Germany. With regard to the test method, please refer to the test standard GB/T22588-2008. The thermal conductivity coefficient (*K*) of the test sample can be calculated according to the following formula: *K = α×Cₚ×ρ,* where *α* is the thermal diffusion coefficient, *Cₚ* is the specific heat capacity, and *ρ* is the bulk density. The mechanism is that, at a certain set temperature, a laser source emits a beam of light pulses instantaneously, uniformly illuminating the surface of the sample, so that the temperature of the surface rises instantaneously after absorbing light energy, and then the surface, as a hot end, propagates the energy in two directions, plane and vertical, in the form of heat conduction. The corresponding temperature rise process at the center of the sample surface is continuously measured using an infrared detector, to obtain a relation curve of the detector signal (temperature) versus time, and then a correction curve is obtained by correction using an appropriate mathematical model, whereby the thermal diffusion coefficient is calculated.

The test instrument for the surface resistivity of graphene in the examples was a multimeter (Keithley, 2400), the test method was as follows: 0.5 mL of the aqueous dispersion of the polymer grafted graphene was added to 50 mL of deionized water for dilution, filtration under reduced pressure was performed through a microporous filtration membrane (Tianjin Jinteng) with a pore size of 0.22 µm, and then 500 mL of deionized water was used to filter out free water-soluble polymer, so that a layer of modified graphene was obtained on the surface of the filtration membrane. After drying, two electrodes with a distance d of 1 mm and a length L of 5 mm were coated using a conductive silver adhesive on the surface of the graphene membrane. The surface resistance *Rₛ* was measured using a multimeter, then the surface resistivity is *ρₛ = RₛL*/*d.*

### Example 1

100.0 g of polyvinyl alcohol PVA (Sinopec Sichuan Vinylon Factory, Brand 1799, degree of polymerization 1700) was dissolved in 1000 mL of deionized water, to which 150 g of 100 mesh flake graphite (Qingdao Santong Graphite Co., Ltd.) was added, and then the mixture was stirred uniformly. By setting the rotation speed of the milling discs at 100 rpm, the mixture was circularly milled for 72 h, and the resulting graphene suspension was poured into a beaker, followed by standing for 10 h, and removing precipitates by filtration to obtain a stable aqueous dispersion of PVA grafted graphene, wherein the mass fraction of the grafted graphene is 4.5%. The yield of the graphene is about 30% of the mass of the flake graphite added. Sample 1 in Figure 2 is a stable aqueous dispersion of the PVA grafted graphene after standing for 15 months, and no precipitate is seen.

10 mL of the aqueous dispersion of PVA grafted graphene was diluted in 200 mL of deionized water, and filtered through a microporous filtration membrane with a pore size of 0.22 µm under reduced pressure, finally 2 L of deionized water was used to filter out free PVA, followed by drying to obtain the purified PVA grafted graphene.

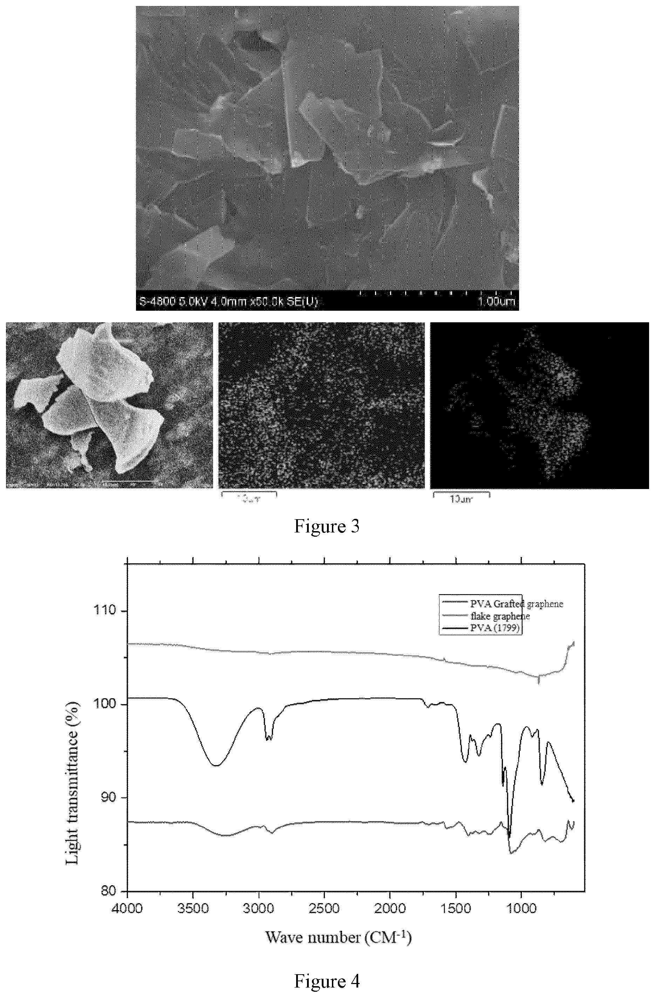

Figure 3 shows a scanning electron microscope image of the prepared PVA grafted graphene, wherein the average size of the sheet is about 2.3 µm, and it can be seen from the two-dimensional energy spectra of carbon element and oxygen element that the oxygen element is mainly near the edge of the graphene sheet, while the carbon element is relatively uniformly distributed, indicating that the grafting mainly occurs at the edge of graphene.

Figure 4 shows infrared absorption spectra of pure flake graphite, pure PVA and PVA grafted graphene, wherein the infrared characteristic absorption peaks of PVA and PVA grafted graphene are identical. The infrared spectra demonstrate that the characteristic absorption peak at wave number 3288 cm⁻¹ is the stretching vibration of the intermolecular or intramolecular -OH bond existing in the form of association of the grafted PVA molecules, the characteristic absorption peaks at wave numbers 2935 cm⁻¹ and 2904 cm⁻¹ are the asymmetric stretching vibrations of the -CH₃ and -CH₂-⁻¹ is the characteristic absorption peak of hydroxyl group caused by -CO- stretching vibration, and the characteristic absorption peak at wave number 1142 cm⁻¹ is the characteristic absorption peak of hydroxyl group caused by -CC- stretching vibration. This indicates that PVA is grafted to graphene. However, there are no characteristic absorption peaks of PVA or other active functional groups in the infrared spectrum of flake graphite. This indicates that the surface of the flake graphite does not contain functional groups that can react with PVA. It is believed that, in the exfoliation process with milling discs, the graphite sheet is broken, and the newly generated graphite edge has many highly active carbon radicals, which react with PVA in solution to finally obtain the PVA edge grafted graphene.

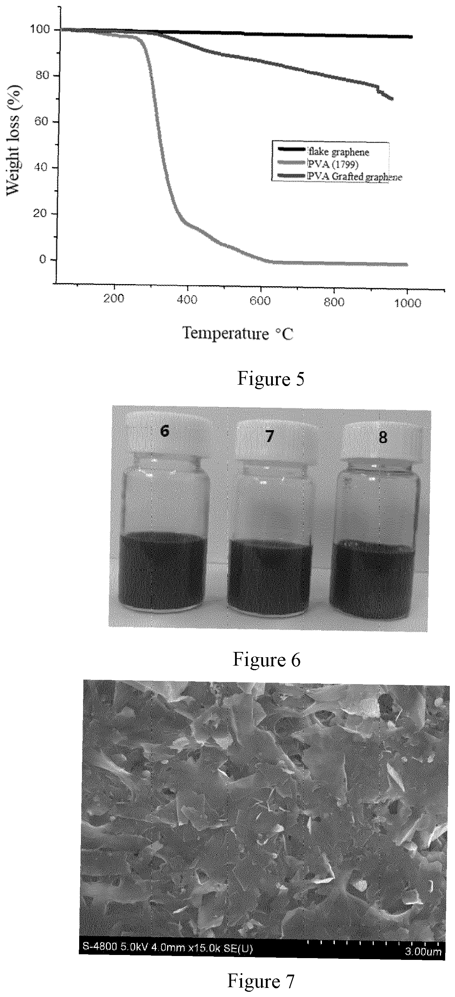

Figure 5 shows thermogravimetric analysis curves of the pure flake graphite, the PVA grafted graphene and the pure PVA. At 630°C, the weight loss of the pure PVA is close to 100%, indicating that PVA is basically and completely decomposed into gas; the flake graphite almost has no weight loss; the weight loss of the PVA edge grafted graphene is 14% at the temperature, indicating that the mass fraction of grafted PVA in the PVA grafted graphene is 14%. It is tested that the thermal conductivity coefficient of the PVA grafted graphene is 276 W/m.K, the surface resistivity is 372 Ω, and the average value of *I_{D}*/*I_{G}* in the Raman spectrum is 0.278.

### Example 2

100.0 g of polyvinyl alcohol PVA (Sinopec Sichuan Vinylon Factory, Brand 1799, degree of polymerization 1700) was dissolved in 1000 mL of deionized water, to which 150 g of 100 mesh flake graphite (Qingdao Santong Graphite Co., Ltd.) was added, and then the mixture was stirred uniformly. By setting the rotation speed of the milling discs at 80 rpm, the mixture was circularly milled for 120 h, and the resulting graphene suspension was poured into a beaker, followed by standing for 10 h, and removing precipitates by filtration to obtain a stable aqueous dispersion of PVA grafted graphene, wherein the mass fraction of the grafted graphene is 6%. After purification according to the method of Example 1, PVA grafted graphene was obtained, wherein the average size of the sheet is about 2.5 µm, and the mass fraction of grafted PVA in the modified graphene is 15.6%. The yield of the graphene is about 40% of the mass of the flake graphite added. Sample 2 in Figure 2 is a stable aqueous dispersion of the PVA grafted graphene after standing for 15 months, and no precipitate is seen. It is tested that the thermal conductivity coefficient of the PVA grafted graphene is 247 W/m.K, the surface resistivity is 678 Ω, and the average value of *I_{D}*/*I_{G}* in the Raman spectrum is 0.412.

### Example 3

100.0 g of polyvinyl alcohol PVA (Kuraray Co., Ltd., Brand CP1000) was dissolved in 1000 mL of deionized water, to which 150 g of 100 mesh flake graphite (Qingdao Santong Graphite Co., Ltd.) was added, and then the mixture was stirred uniformly. By setting the rotation speed of the milling discs at 100 rpm, the mixture was circularly milled for 100 h, and the resulting graphene suspension was poured into a beaker, followed by standing for 10 h, and removing precipitates by filtration to obtain a stable aqueous dispersion of PVA grafted graphene, wherein the mass fraction of the grafted graphene is 4.6%. After purification according to the method of Example 1, PVA grafted graphene was obtained, wherein the average size of the sheet is about 4.8 µm, and the mass fraction of PVA in the grafted graphene is 13.1%. The yield of the graphene is about 31% of the mass of the flake graphite added. Sample 3 in Figure 2 is a stable aqueous dispersion of the PVA grafted graphene after standing for 15 months, and no precipitate is seen. It is tested that the thermal conductivity coefficient of the PVA grafted graphene is 260 W/m.K, the surface resistivity is 324 Ω, and the average value of *I_{D}*/*I_{G}* in the Raman spectrum is 0.207.

### Example 4

200.0 g of polyvinyl alcohol PVA (Kuraray Co., Ltd., Brand CP1000) was dissolved in 1000 mL of deionized water, to which 150 g of 100 mesh flake graphite (Qingdao Santong Graphite Co., Ltd.) was added, and then the mixture was stirred uniformly. By setting the rotation speed of the milling discs at 100 rpm, the mixture was circularly milled for 72 h, and the resulting graphene suspension was poured into a beaker, followed by standing for 10 h, and removing precipitates by filtration to obtain a stable aqueous dispersion of PVA grafted graphene, wherein the mass fraction of the grafted graphene is 5.3%. After purification according to the method of Example 1, PVA grafted graphene was obtained, wherein the average size of the sheet is about 4.2 µm, and the mass fraction of PVA in the grafted graphene is 12.8%. The yield of the graphene is about 35% of the mass of the flake graphite added. Sample 4 in Figure 2 is a stable aqueous dispersion of the PVA grafted graphene after standing for 15 months, and no precipitate is seen. It is tested that the thermal conductivity coefficient of the PVA grafted graphene is 235 W/m.K, the surface resistivity is 276 Ω, and the average value of *I_{D}*/*I_{G}* in the Raman spectrum is 0.175.

### Example 5

80.0 g of polyvinyl alcohol PVA (Sinopec Sichuan Vinylon Factory, Brand 1799, degree of polymerization 1700) was dissolved in 1000 mL of deionized water, to which 150 g of 200 mesh flake graphite (Qingdao Santong Graphite Co., Ltd.) was added, and then the mixture was stirred uniformly. By setting the rotation speed of the milling discs at 150 rpm, the mixture was circularly milled for 48 h, and the resulting graphene suspension was poured into a beaker, followed by standing for 10 h, and removing precipitates by filtration to obtain a stable aqueous dispersion of PVA grafted graphene, wherein the mass fraction of the grafted graphene is 5.4%. After purification according to the method of Example 1, PVA grafted graphene was obtained, wherein the average size of the sheet is about 3.2 µm, and the mass fraction of PVA in the grafted graphene is 9.8%. The yield of the graphene is about 36% of the mass of the flake graphite added. Sample 5 in Figure 2 is a stable aqueous dispersion of the PVA grafted graphene after standing for 15 months, and no precipitate is seen. It is tested that the thermal conductivity coefficient of the PVA grafted graphene is 289 W/m.K, the surface resistivity is 198 Ω, and the average value of *I_{D}*/*I_{G}* in the Raman spectrum is 0.102.

### Example 6

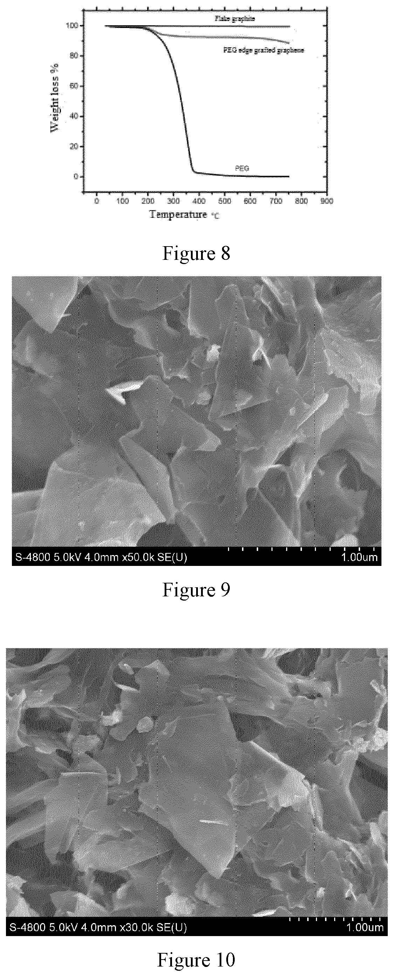

100.0 g of polyethylene glycol (Xilong Scientific Co., Ltd., viscosity average molecular weight 300,000) was dissolved in 1000 mL of deionized water, to which 150 g of 100 mesh flake graphite (Qingdao Santong Graphite Co., Ltd.) was added, and then the mixture was stirred uniformly. By setting the rotation speed of the milling discs at 100 rpm, the mixture was circularly milled for 72 h, and the resulting graphene suspension was poured into a beaker, followed by standing for 10 h, and removing precipitates by filtration to obtain a stable aqueous dispersion of polyethylene glycol grafted graphene, wherein the mass fraction of the grafted graphene is 4.8%. After purification according to the method of Example 1, polyethylene glycol grafted graphene was obtained, wherein the average size of the sheet is about 2.7 µm. The yield of the grafting modified graphene is about 32% of the mass of the flake graphite added. Sample 6 in Figure 6 is a stable aqueous dispersion of the polyethylene glycol grafted graphene after standing for 10 months, and no precipitate is seen. Figure 7 shows a scanning electron microscope image of the polyethylene glycol grafted graphene. Figure 8 shows thermogravimetric analysis curves of the pure flake graphite, the polyethylene glycol grafted graphene and the pure polyethylene glycol. At 380°C, the weight loss of the pure polyethylene glycol is close to 100%, indicating that polyethylene glycol is completely decomposed into gas; the flake graphite almost has no weight loss; the weight loss of the polyethylene glycol grafted graphene is 7.8% at the temperature, indicating that the mass fraction of grafted polyethylene glycol in the graphene is 7.8%.

It is tested that the thermal conductivity coefficient of the polyethylene glycol grafted graphene is 416 W/m.K, the surface resistivity is 12.0 Ω, and the average value of *I_{D}*/*I_{G}* in the Raman spectrum is 0.095.

### Example 7

20.0 g of sodium polyacrylate (Sinopharm Chemical Reagent Co., Ltd., weight average molecular weight about 450,000) was dissolved in 1000 mL of deionized water, to which 150 g of 100 mesh flake graphite (Qingdao Santong Graphite Co., Ltd.) was added, and then the mixture was stirred uniformly. By setting the rotation speed of the milling discs at 100 rpm, the mixture was circularly milled for 72 h, and the resulting graphene suspension was poured into a beaker, followed by standing for 10 h, and removing precipitates by filtration to obtain a stable aqueous dispersion of sodium polyacrylate grafted graphene, wherein the mass fraction of the grafted graphene is 3.1%. After purification according to the method of Example 1, sodium polyacrylate grafted graphene was obtained, wherein the average size of the sheet is about 2.8 µm, and the mass fraction of sodium polyacrylate in the grafted graphene is 6.9%. The yield of the graphene is about 21% of the mass of the graphite added. Sample 7 in Figure 6 is a stable aqueous dispersion of the sodium polyacrylate grafted graphene after standing for 10 months, and no precipitate is seen. Figure 9 shows a scanning electron microscope image of the sodium polyacrylate grafted graphene.

It is tested that the thermal conductivity coefficient of the sodium polyacrylate grafted graphene is 288 W/m.K, the surface resistivity is 31.2 Ω, and the average value of *I_{D}*/*I_{G}* in the Raman spectrum is 0.127.

### Example 8

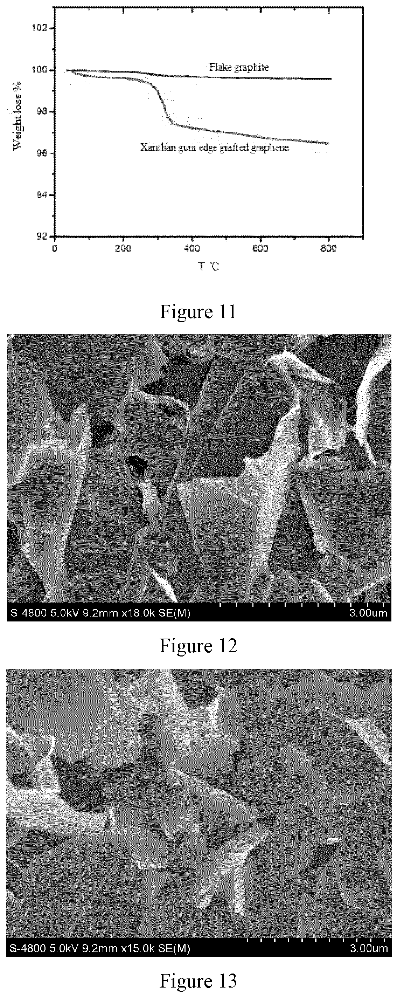

6.0 g of xanthan gum (Meihua Holdings Group Co., Ltd., MHF-80R) was dissolved in 1000 mL of deionized water, to which 150 g of 100 mesh flake graphite (Qingdao Santong Graphite Co., Ltd.) was added, and then the mixture was stirred uniformly. By setting the rotation speed of the milling discs at 100 rpm, the mixture was circularly milled for 72 h, and the resulting graphene suspension was poured into a beaker, followed by standing for 10 h, and removing precipitates by filtration to obtain a stable aqueous dispersion of xanthan gum edge grafted graphene, wherein the mass fraction of the grafted graphene is 2.8%. After purification according to the method of Example 1, xanthan gum grafted graphene was obtained, wherein the average size of the sheet is about 2.9 µm. The yield of the graphene is about 20% of the mass of the flake graphite added. Sample 8 in Figure 6 is a stable aqueous dispersion of the xanthan gum grafted graphene after standing for 10 months, and no precipitate is seen. Figure 10 shows a scanning electron microscope image of the xanthan gum grafted graphene. Figure 11 shows thermogravimetric analysis curves of the pure flake graphite and the xanthan gum grafted graphene. The flake graphite almost has no weight loss; the xanthan gum grafted graphene starts to decompose and lose weight at 280°C, and almost has no more weight loss till 330°C, at this time, the weight loss is 3.2%, indicating that the mass fraction of grafted xanthan gum in the graphene is 3.2%. It is tested that the thermal conductivity coefficient of the xanthan gum grafted graphene is 257 W/m.K, the surface resistivity is 281 Ω, and the average value of *I_{D}*/*I_{G}* in the Raman spectrum is 0.081.

### Example 9

5.0 g of polyacrylamide (Sinopharm Chemical Reagent Co., Ltd., weight average molecular weight about 1,000,000) was dissolved in 1000 mL of deionized water, to which 150 g of 100 mesh flake graphite (Qingdao Santong Graphite Co., Ltd.) was added, and then the mixture was stirred uniformly. By setting the rotation speed of the milling discs at 100 rpm, the mixture was circularly milled for 72 h, and the resulting graphene suspension was poured into a beaker, followed by standing for 10 h, and removing precipitates by filtration to obtain a stable aqueous dispersion of polyacrylamide grafted graphene, wherein the mass fraction of the grafted graphene is 5.25%. After purification according to the method of Example 1, polyacrylamide grafted graphene was obtained, wherein the average size of the sheet is about 3.1 µm, and the mass fraction of polyacrylamide in the grafted graphene is 2.3%. The yield of the graphene is about 23% of the mass of the flake graphite added. The prepared aqueous dispersion can be stably stored for 15 months without precipitation. Figure 12 shows a scanning electron microscope image of the polyacrylamide grafted graphene. It is tested that the thermal conductivity coefficient of the polyacrylamide grafted graphene is 273 W/m.K, the surface resistivity is 279 Ω, and the average value of *I_{D}*/*I_{G}* in the Raman spectrum is 0.097.

### Example 10

10 g of hydroxypropyl methylcellulose (Shandong Chuangyao Biotechnology Co., Ltd., CY-50000(S)) was dissolved in 1000 mL of deionized water, to which 150 g of 100 mesh flake graphite (Qingdao Santong Graphite Co., Ltd.) was added, and then the mixture was stirred uniformly. By setting the rotation speed of the milling discs at 100 rpm, the mixture was circularly milled for 72 h, and the resulting graphene suspension was poured into a beaker, followed by standing for 10 h, and removing precipitates by filtration to obtain a stable aqueous dispersion of hydroxypropyl methylcellulose grafted graphene, wherein the mass fraction of the grafted graphene is 3.75%. After purification according to the method of Example 1, hydroxypropyl methylcellulose grafted graphene was obtained, wherein the average size of the sheet is about 2.8 µm, and the mass fraction of hydroxypropyl methylcellulose in the grafted graphene is 3.1%. The yield of the graphene is about 25% of the mass of the flake graphite added. The prepared aqueous dispersion can be stably stored for 15 months without precipitation. Figure 13 shows a scanning electron microscope image of the hydroxypropyl methylcellulose grafted graphene. It is tested that the thermal conductivity coefficient of the hydroxypropyl methylcellulose grafted graphene is 181 W/m.K, the surface resistivity is 176 Ω, and the average value of *I_{D}*/*I_{G}* in the Raman spectrum is 0.108.

### Example 11

150 g of maleic anhydride isobutylene copolymer (Kuraray Co., Ltd., Brand ISOBAM-18, number average molecular weight 300,000-350,000) and 100 g of sodium carbonate (Sinopharm Chemical Reagent Co., Ltd., a.p.) were dissolved in 1000 mL of deionized water, to which 150 g of 100 mesh flake graphite (Qingdao Santong Graphite Co., Ltd.) was added, and then the mixture was stirred uniformly. By setting the rotation speed of the milling discs at 100 rpm, the mixture was circularly milled for 72 h, and the resulting graphene suspension was poured into a beaker, followed by standing for 10 h, and removing precipitates by filtration to obtain a stable aqueous dispersion of sodium maleate isobutylene copolymer grafted graphene, wherein the mass fraction of the grafted graphene is 4.7%. After purification according to the method of Example 1, sodium maleate isobutylene copolymer grafted graphene was obtained, wherein the average size of the sheet is about 2.7 µm, and the mass fraction of sodium maleate isobutylene copolymer in the grafted graphene is 12.8%. The yield of the graphene is about 31% of the mass of the flake graphite added. Figure 14 shows a scanning electron microscope image of the sodium maleate isobutylene copolymer grafted graphene. The prepared aqueous dispersion can be stably stored for more than 10 months. It is tested that the thermal conductivity coefficient of the sodium maleate isobutylene copolymer grafted graphene is 143 W/m.K, the surface resistivity is 657 Ω, and the average value of *I_{D}*/*I_{G}* in the Raman spectrum is 0.314.

### Example 12

150 g of maleic anhydride vinyl acetate copolymer (Beijing Chemical Industry Research Institute, reference for preparation method: Ru Yue, Discovery, Properties and Application of A New Fluorescence/Phosphorescence Polymer Family[D], Beijing University of Chemical Technology, 2015) and 100 g of sodium carbonate (Sinopharm Chemical Reagent Co., Ltd., a.p.) were dissolved in 1000 mL of deionized water, to which 150 g of 100 mesh flake graphite (Qingdao Santong Graphite Co., Ltd.) was added, and then the mixture was stirred uniformly. By setting the rotation speed of the milling discs at 100 rpm, the mixture was circularly milled for 80 h, and the resulting graphene suspension was poured into a beaker, followed by standing for 10 h, and removing precipitates by filtration to obtain a stable aqueous dispersion of sodium maleate vinyl acetate copolymer grafted graphene, wherein the mass fraction of the grafted graphene is 2.7%. After purification according to the method of Example 1, sodium maleate vinyl acetate copolymer grafted graphene was obtained, wherein the average size of the sheet is about 3.2 µm, and the mass fraction of sodium maleate vinyl acetate copolymer in the grafted graphene is 6.8%. The yield of the graphene is about 18% of the mass of the flake graphite added. The prepared aqueous dispersion can be stably stored for more than 10 months. It is tested that the thermal conductivity coefficient of the sodium maleate vinyl acetate copolymer grafted graphene is 283 W/m.K, the surface resistivity is 357 Ω, and the average value of *I_{D}*/*I_{G}* in the Raman spectrum is 0.154.

### Example 13

To 1000 g of an aqueous dispersion of polyethyleneimine (Guohua Reagent, weight average molecular weight 70,000) with a mass fraction of 40%, 100 g of 100 mesh flake graphite (Qingdao Santong Graphite Co., Ltd.) was added, and then the mixture was stirred uniformly. By setting the rotation speed of the milling discs at 100 rpm, the mixture was circularly milled for 72 h, and the resulting graphene suspension was poured into a beaker, followed by standing for 10 h, and removing precipitates by filtration to obtain a stable aqueous dispersion of polyethyleneimine grafted graphene, wherein the mass fraction of the grafted graphene is 3.5%. After purification according to the method of Example 1, polyethyleneimine grafted graphene was obtained, wherein the average size of the sheet is about 2.5 µm, and the mass fraction of polyethyleneimine in the grafted graphene is 15.9%. The yield of the graphene is about 35% of the mass of the flake graphite added. Figure 15 shows a scanning electron microscope image of the polyethyleneimine grafted graphene. The prepared aqueous dispersion can be stably stored for more than 10 months. It is tested that the thermal conductivity coefficient of the polyethyleneimine grafted graphene is 126 W/m.K, the surface resistivity is 792 Ω, and the average value of *I_{D}*/*I_{G}* in the Raman spectrum is 0.291.

### Example 14

13.0 g of PVA (Sinopec Sichuan Vinylon Factory, Brand 1799, degree of polymerization 1700) was dissolved in 112.0 g of deionized water, to which 5.0 g of the solution of the PVA grafted graphene prepared in Example 5 was added, and then the mixture was mechanically stirred uniformly, to prepare a solution containing the PVA grafted graphene with a mass fraction of 2% in PVA. The solution was poured into a glass dish, and water was volatilized at normal temperature and normal pressure to prepare a film with a thickness of 1.0 mm. The surface resistivity of the film is 2.09×10⁷ Ω.

### Comparative Example 1

To 1000 mL of deionized water, 150 g of 100 mesh flake graphite (Qingdao Santong Graphite Co., Ltd.) was added, and stirred uniformly. By setting the rotation speed of the milling discs at 100 rpm, the obtained slurry was circularly milled for 100 h, and the resulting graphene suspension was poured into a beaker, followed by standing for 10 h, and removing precipitates by filtration. Only a very small amount of graphene was obtained, which is less than 0.5% of the mass of the flake graphite added. The graphene suspension can only be stably stored for a few days, and obvious precipitation can be observed after a few days. After one week, almost all of it precipitates.

### Comparative Example 2

100.0 g of polyvinyl alcohol PVA (Sinopec Sichuan Vinylon Factory, Brand 1799, degree of polymerization 1700) was dissolved in 1000 mL of deionized water, to which 150 g of 100 mesh flake graphite (Qingdao Santong Graphite Co., Ltd.) was added, and then the mixture was stirred uniformly. By setting the rotation speed of the milling discs at 8 rpm, the mixture was circularly milled for 120 h, and the resulting graphene suspension was poured into a beaker, followed by standing for 10 h, and removing precipitates by filtration to obtain an aqueous dispersion, wherein the mass fraction of the grafted graphene is 0.13%. After purification according to the method of Example 1, graphene was obtained, wherein the average size of the sheet is about 0.7 µm, and the mass fraction of the PVA grafted is 0.1%. The yield is about 1% of the mass of the flake graphite added. Obvious precipitation can be seen in the aqueous dispersion after standing for 1 month. It is tested that the average value of *I_{D}*/*I_{G}* in the Raman spectrum of the product is 0.035.

### Comparative Example 3

100.0 g of polyvinyl alcohol PVA (Sinopec Sichuan Vinylon Factory, Brand 1799, degree of polymerization 1700) was dissolved in 1000 mL of deionized water, to which 150 g of 100 mesh flake graphite (Qingdao Santong Graphite Co., Ltd.) was added, and then the mixture was stirred uniformly. By setting the rotation speed of the milling discs at 80 rpm, the mixture was circularly milled for 4 h, and the resulting graphene suspension was poured into a beaker, followed by standing for 10 h, and removing precipitates by filtration to obtain an aqueous dispersion, wherein the mass fraction of the grafted graphene is 0.3%. After purification according to the method of Example 1, PVA grafted graphene was obtained, wherein the average size of the sheet is about 0.6 µm, and the mass fraction of PVA grafted in the modified graphene is 0.34%. The yield is about 2.1% of the mass of the flake graphite added. Obvious precipitation can be seen in the aqueous dispersion after standing for 1 month. It is tested that the thermal conductivity coefficient of the product is 27 W/m.K, and the average value of *I_{D}*/*I_{G}* in the Raman spectrum is 0.040.

### Comparative Example 4

1000.0 g of stainless steel balls with a diameter of 5.0 mm and 3.0 g of 100 mesh flake graphite (Qingdao Santong Graphite Co., Ltd.) were charged into a stainless steel ball mill tank (pressure resistance 16.0 MPa, volume 500 mL). At normal temperature, carbon dioxide was filled into the ball mill tank by using a gas filling device till the pressure of 7.5 MPa. The ball mill tank was then placed on a planetary ball mill (Fritsch, Germany, Model Pulverisette 6) to perform ball milling at the rotation speed of 400 rpm for 48 h. After emptying the carbon dioxide in the ball mill tank, the steel balls were screened out by using a sieve, to obtain ball-milled graphite micro-sheets.

The ball-milled graphite micro-sheets were dispersed in 500 ml of deionized water, and stirred for 1 h, to which a sodium hydroxide solution was added, the pH value of the system was adjusted to be weakly alkaline, followed by standing for 24 h, and filtering out precipitated thick graphite flakes, to obtain a sodium carboxylate modified graphene solution. The sodium carboxylate modified graphene solution was distilled and dried to obtain 2.4 g of black sodium carboxylate modified graphene powder, yield 80%. The size of the graphene sheet is less than 200 nm, and the grafting rate of carboxyl groups is 21.5% by mass. It is tested that the surface resistivity of the product is 4.5×10³ Ω, the thermal conductivity coefficient is 0.51 W/m.K, and the average value of *I_{D}*/*I_{G}* in the Raman spectrum is 0.635.

### Comparative Example 5

9.80 g of PVA (Sinopec Sichuan Vinylon Factory, Brand 1799, degree of polymerization 1700) was dissolved in 90.0 g of deionized water, to which 0.2 g of the graphene prepared in Comparative Example 4 was added, and then the mixture was mechanically stirred uniformly, to prepare a solution containing the graphene with a mass fraction of 2% in PVA. The solution was poured into a glass dish, and water was volatilized at normal temperature and normal pressure to prepare a film with a thickness of 1.0 mm. The surface resistivity of the film is 8.7×10⁹ Ω.

As can be seen from the comparison of Example 1 with Comparative Examples 2 and 3, when the rotation speed of the milling discs is too low or the milling time is too short, the exfoliation degree of graphene is low, and the water-soluble polymer cannot be effectively grafted to graphene, so that a stable water dispersion cannot be formed.

As can be seen from the comparison of Examples 1, 2 and 5 with Comparative Examples 2 and 3, the content of the water-soluble polymer in the grafted graphene needs to reach a certain level to form a stable aqueous dispersion.

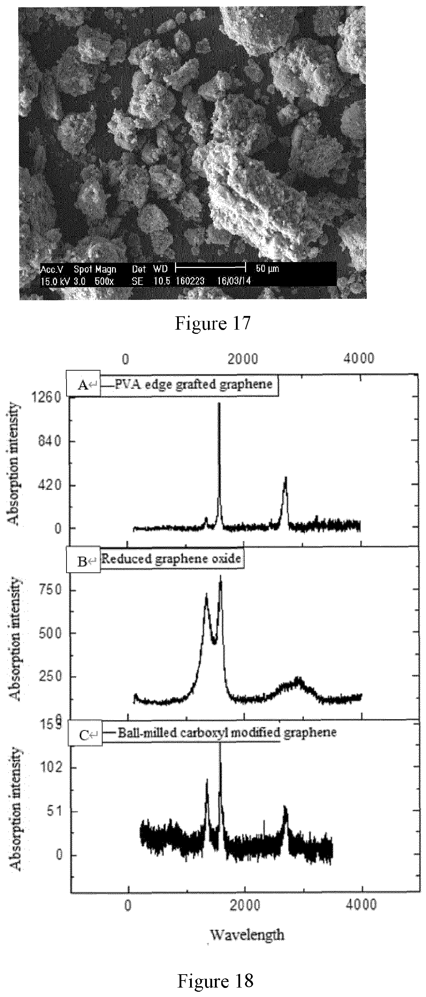

Figure 18 shows Raman spectra of graphene: (A) PVA edge grafted graphene prepared in Example 5, (B) reduced graphene oxide (Nanjing Jicang Nanomaterial Technology Co., Ltd., Model GCNM-1), (C) carboxyl modified graphene prepared in Comparative Example 4. The average value of *I_{D}*/*I_{G}* in the Raman spectrum of the PVA edge grafted graphene of the present invention is 0.102, which is far lower than the average value (0.883) of *I_{D}*/*I_{G}* in the Raman spectrum of commercially available reduced graphene oxide and the average value (0.635) of *I_{D}*/*I_{G}* in the Raman spectrum of the carboxyl modified graphene prepared by the ball milling method, indicating that the edge grafted graphene of the present invention is more regular, and the graphene lattice is less destructed.

As can be seen from the comparison of Example 14 with Comparative Example 5, the PVA-based composite film containing the PVA edge grafted graphene of the present invention has the resistivity about 2 orders of magnitude lower than that of the PVA-based composite film containing the carboxyl modified graphene prepared by the ball milling method, indicating that it has significantly superior conductivity. This is mainly attributed to that: (1) the PVA edge grafted graphene can be stably dispersed in water, and after mixing with PVA aqueous solution, the graphene can be uniformly dispersed in PVA, which is conducive to the formation of conductive network, whereas the graphene prepared by the ball milling method is difficult to disperse in PVA aqueous solution; (2) compared with ball-milled graphene, the PVA edge grafted graphene has a more complete internal structure and larger graphene size, resulting in better conductivity.

While the examples of the present invention have been described above, the description is illustrative, not exhaustive, and the present invention is not limited to the examples disclosed herein. Many modifications and variations will be apparent to those skilled in the art without departing from the scope and spirit of the examples described herein.

The endpoints of the ranges and any values disclosed in present application documents are not to be limited to the precise ranges or values, and these ranges or values should be understood to encompass values close to these ranges or values. For numerical ranges, the endpoint values of each range, the endpoint values of each range and individual point values, and individual point values can be combined with each other to obtain one or more new numerical ranges, which should be considered as specifically disclosed herein.

## Claims

1. An edge-grafting-modified graphene, **characterized in that**, the edge-grafting-modified graphene comprises a graphene and a water-soluble polymer grafted on the edge thereof, wherein the mass content of the water-soluble polymer grafted in the edge-grafting-modified graphene is 1-30%, preferably 2-25%, based on the total mass of the edge-grafting-modified graphene.

2. The edge-grafting-modified graphene as claimed in claim 1, wherein,
an average value of *I_{D}*/*I_{G}* in the Raman spectrum of the edge-grafting-modified graphene is 0.05-0.60, preferably 0.08-0.55, and/or
the edge-grafting-modified graphene can form a stable aqueous dispersion in water, and the aqueous dispersion is stable under room temperature and normal pressure conditions for more than 10 months, preferably more than 15 months.

3. The edge-grafting-modified graphene as claimed in claim 1, wherein, the water-soluble polymer is at least one of a water-soluble natural polymer, a water-soluble semisynthetic polymer, and a water-soluble synthetic polymer.

4. The edge-grafting-modified graphene as claimed in claim 3, wherein, the water-soluble natural polymer is selected from at least one of guar gum, xanthan gum, gelatin and Arabic gum.

5. The edge-grafting-modified graphene as claimed in claim 3, wherein, the water-soluble semisynthetic polymer is selected from at least one of modified starch and modified cellulose, wherein the modified cellulose is preferably at least one of hydroxyethyl cellulose, hydroxypropyl methylcellulose and methylcellulose.

6. The edge-grafting-modified graphene as claimed in claim 3, wherein, the water-soluble synthetic polymer is selected from at least one of a compound of formula I, a compound of formula II, a compound of formula III, a compound of formula IV and a salt thereof, a compound of formula V and a salt thereof, and a compound of formula VI; 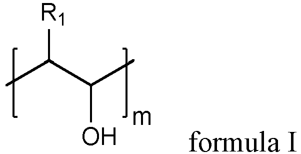 in formula I, R₁ is H or C₁-C₄ alkyl; m is an integer of ≥400; 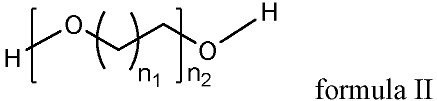 in formula II, n₁ is an integer of 1-8; n₂ is an integer of ≥10; 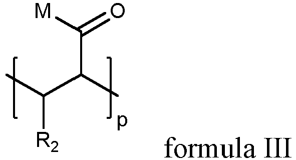 in formula III, R₂ is H or C₁-C₄ alkyl; M is OR₃ or amino, R₃ is H, alkali metal or NH₄; p is an integer of ≥500; 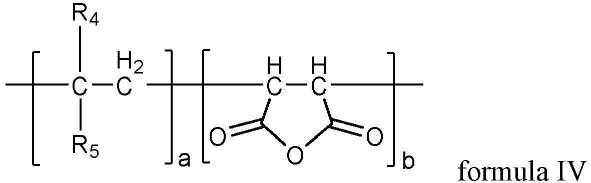 in formula IV, R₄ is C₁-C₃ alkyl or phenyl, R₅ is H or methyl, a, b are each independently an integer of ≥50; 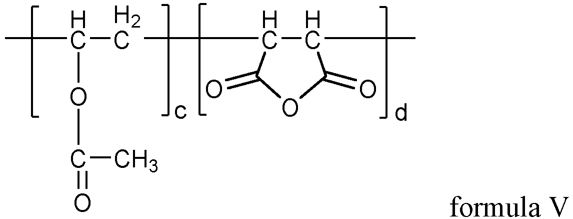 in formula V, c, d are each independently an integer of ≥50; 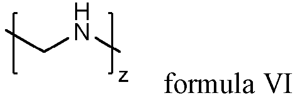 in formula VI, z is an integer of ≥50.

7. The edge-grafting-modified graphene as claimed in claim 6, wherein,
the compound of formula I is polyvinyl alcohol; and/or
the compound of formula II is polyethylene glycol, polypropylene glycol, polybutylene glycol, polypentylene glycol, polyhexylene glycol, polyheptylene glycol or polyoctylene glycol; and/or
the compound of formula III is polyacrylic acid, sodium polyacrylate, potassium polyacrylate, ammonium polyacrylate, lithium polyacrylate, polymethacrylic acid, sodium polymethacrylate, potassium polymethacrylate, ammonium polymethacrylate, lithium polymethacrylate, or polyacrylamide; and/or
the compound of formula IV is maleic anhydride 1-butene copolymer, maleic anhydride isobutylene copolymer, maleic anhydride styrene copolymer, maleic anhydride α-methyl styrene copolymer, maleic anhydride 1-pentene copolymer, the salt thereof is corresponding sodium, potassium or ammonium salt thereof; and/or
the compound of formula V is maleic anhydride vinyl acetate copolymer, the salt thereof is corresponding sodium, potassium or ammonium salt thereof; and/or
the compound of formula VI is polyethyleneimine.

8. The edge-grafting-modified graphene as claimed in any one of claims 1-7, wherein, the average lateral size of the edge-grafting-modified graphene is 1-10 µm, preferably 2-5 µm.

9. The edge-grafting-modified graphene as claimed in any one of claims 1-8, wherein, the edge-grafting-modified graphene is prepared by a milling disc process, preferably, the milling conditions include: a rotation speed is 10-300 rpm, preferably 50-200 rpm; a time is 5-200 h, preferably 10-150 h.

10. An aqueous dispersion of edge-grafting-modified graphene, **characterized in that**, the aqueous dispersion comprises water and the edge-grafting-modified graphene stably dispersed therein, wherein the edge-grafting-modified graphene is the edge-grafting-modified graphene as claimed in any one of claims 1-9.

11. The aqueous dispersion as claimed in claim 10, wherein, the mass fraction of the edge-grafting-modified graphene in the aqueous dispersion is 2-40%, preferably 3-30%.

12. The aqueous dispersion as claimed in claim 10 or 11, wherein, the aqueous dispersion is stable under room temperature and normal pressure conditions for more than 10 months, preferably more than 15 months.

13. A preparation method of the aqueous dispersion of edge-grafting-modified graphene as claimed in any one of claims 10-12, comprising following steps:
uniformly mixing a water-soluble polymer, water and graphite, milling in a milling disc kettle after the water-soluble polymer is completely dissolved, standing after milling is finished, and removing precipitates to obtain the aqueous dispersion of edge-grafting-modified graphene.

14. The preparation method as claimed in claim 13, wherein, the graphite is a natural graphite and/or an artificial graphite, wherein the natural graphite is selected from one or more of flake graphite, block graphite, aphanitic graphite, the artificial graphite is selected from one or more of pyrolytic graphite, highly oriented pyrolytic graphite, the graphite is preferably flake graphite, the particle size of the graphite is 5-8000 mesh, preferably 35-3000 mesh, more preferably 50-1600 mesh, and still more preferably 50-300 mesh.

15. The preparation method as claimed in claim 13, wherein, the milling is carried out in an open or closed system, preferably carried out circularly at room temperature and normal pressure; the milling conditions include: a rotation speed is 10-300 rpm, preferably 50-200 rpm; a time is 5-200 h, preferably 10-150 h, more preferably 30-120 h.

16. The preparation method as claimed in claim 13, wherein, the concentration of the water-soluble polymer is 0.3-80% by mass, preferably 0.5-50% by mass, more preferably 1-40% by mass, based on the total mass of the water-soluble polymer and water.

17. A preparation method of the edge-grafting-modified graphene as claimed in any one of claims 1-9, comprising the following steps:
(1) preparing an aqueous dispersion of edge-grafting-modified graphene according to the method as claimed in any one of claims 13-16;
(2) filtering the aqueous dispersion of the edge-grafting-modified graphene obtained in the step (1), and drying to obtain the edge-grafting-modified graphene.

18. The preparation method as claimed in claim 17, wherein, the filtering is filtering under reduced pressure by use of a microporous filtration membrane.

19. The preparation method as claimed in claim 17, wherein, the filtering further comprises:
diluting the aqueous dispersion of edge-grafting-modified graphene before filtering; and/or
filtering off free water-soluble polymers with water after filtering.

20. Application of the edge-grafting-modified graphene as claimed in any one of claims 1-9 or the aqueous dispersion of edge-grafting-modified graphene as claimed in any one of claims 10-12 in the fields of antistatic or conductive composite polymer materials, heat conductive composite polymer materials, multi-layer composite barrier film, barrier layer materials, adsorption materials, functional coatings, antistatic or conductive fiber materials, sunlight or microwave absorption materials.
